# FASCICULE DE BREVET EUROPEEN

(11) **EP 1 385 780 B1**
(45) Date de publication et mention de la délivrance du brevet: **22.11.2006**
(21) Numéro de dépôt: 02732860.8
(22) Date de dépôt: 13.05.2002
(51) Int. Cl.: B67D 5/70, B63B 27/24

(54) **SYSTEME DE TRANSFERT D'UN PRODUIT FLUIDE, NOTAMMENT D'UN GAZ NATUREL LIQUEFIE, ENTRE UN VEHICULE DE TRANSPORT TEL QU'UN NAVIRE ET UNE INSTALLATION DE RECEPTION OU DE FOURNITURE DE CE PRODUIT**
FLÜSSIGKEITSTRANSFERIERUNGSSYSTEM, INSBESONDERE LNG, ZWISCHEN EINEM TRANSPORTFAHRZEUG, WIE EIN SCHIFF, UND EINE EMPFANGS- ODER LIEFERSTATION FÜR DIESES PRODUKT
SYSTEM FOR TRANSFERRING A FLUID PRODUCT, IN PARTICULAR A LIQUEFIED NATURAL GAS BETWEEN A TRANSPORT VEHICLE SUCH AS A SHIP AND AN INSTALLATION RECEIVING OR SUPPLYING SAID PRODUCT

(30) Priorité: 11.05.2001 FR 0106279
(43) Date de publication de la demande: 04.02.2004
(73) Titulaire: Société Europeenne d'Ingenierie Mécanique: Eurodim, 92566 Rueil Malmaison (FR)
(72) Inventeur: DUPONT, Bernard, F-95600 Eaubonne (FR); PAQUET, Stéphane, F-75015 Paris (FR)
(74) Mandataire: Berger, Helmut
(86) Numéro de dépôt international: PCT/FR2002/001603
(87) Numéro de publication internationale: WO 2002/092494

(56) Documents cités:
- US-A- 2 922 446
- US-A- 4 090 538
- US-A- 4 261 398

## Description

L'invention concerne un système de transfert d'un produit fluide, notamment d'un gaz naturel liquéfié, entre un véhicule de transport tel qu'un navire et une installation de réception ou de fourniture au navire de ce produit, du type comprenant un dispositif de transfert du produit entre le navire et l'installation, qui est supporté à une extrémité par une structure de support et dont l'autre extrémité est susceptible d'être reliée à un dispositif manifold du véhicule.

Des systèmes de transfert de ce type pour le transfert de gaz naturel liquéfié, qui sont connus comme le document US 4 261 398 qui est considéré comme l'état de la technique le plus proche et qui comporte toutes les caractéristiques du préambule de la revendication 1, ne sont pas adaptés pour pouvoir être utilisés dans des conditions d'environnement sévères.

La présente invention comme décrit dans la revendication indépendante 1, a pour but de proposer un système qui élimine l'inconvénient susmentionné des systèmes connus.

Pour atteindre ce but, le système de transfert selon l'invention est caractérisé par la partie caractérisante de la revendication indépendante 1.

Selon une caractéristique de l'invention le dispositif de transfert déformable est connecté à la tuyauterie de transfert fixe au niveau de l'extrémité libre de la bôme et la connexion du dispositif de transfert déformable à la tuyauterie de transfert fixe forme les moyens par lesquels le dispositif de transfert déformable est suspendu à la bôme.

Selon une autre caractéristique de l'invention le poste d'amarrage est du type à point d'amarrage unique, le véhicule est susceptible de tourner librement autour du poste d'amarrage pour se placer dans le lit des éléments (houle, vent, courant).

Selon une autre caractéristique de l'invention, la bôme est entraînée par le navire par l'intermédiaire du dispositif de transfert déformable lorsque ce dispositif est connecté au dispositif manifold du navire.

Selon encore une autre caractéristique de l'invention, lorsque le dispositif de transfert déformable n'est pas connecté au dispositif manifold, la bôme est libre de se placer dans le lit du vent pour résister aux tempêtes en conditions de survie.

Selon encore une autre caractéristique de l'invention, on prévoit des moyens de freinage adaptés dans le système de rotation de la bôme pour éviter un nombre de petits mouvements trop importants.

Selon encore une autre caractéristique de l'invention la bôme et le dispositif de transfert déformable 11 sont configurés de telle façon que la résultante des efforts s'exerçant sur la bôme passe par l'axe neutre de celle-ci de façon que la bôme soit seulement sollicitée en flexion simple.

Selon encore une autre caractéristique de l'invention le dispositif de transfert déformable est réalisé de façon à produire un filtrage des déplacements du navire de façon que des faibles déplacements du navire autour de sa position moyenne n'engendrent pas un effort latéral suffisant pour entraîner la rotation de la bôme et que le dispositif soit ainsi en mesure d'absorber les mouvements hautes fréquences et d'éviter les pics d'effort.

Selon encore une autre caractéristique de l'invention le dispositif de transfert déformable est stocké sous la bôme en étant orienté parallèlement à l'axe de cette dernière et est connecté à la tuyauterie fixe par un joint rotatif permettant lors de l'établissement d'une connexion au dispositif manifold d'un navire une rotation dans une position perpendiculaire à l'axe longitudinal du navire.

Selon encore une autre caractéristique de l'invention, le dispositif de transfert déformable comporte à son extrémité libre un dispositif de connexion au dispositif manifold du navire.

Selon encore une autre caractéristique de l'invention le dispositif de connexion et le dispositif manifold du navire comportent des moyens de centrage lors de la connexion dynamique du dispositif de transfert au dispositif manifold.

Selon encore une autre caractéristique de l'invention le dispositif de transfert déformable comporte une pluralité de paires de bras de transfert, que les extrémités libres des bras internes sont reliées à une pièce commune connectée à la tuyauterie fixe par le joint tournant précité et en ce que chaque bras extérieur porte un connecteur.

Selon encore une autre caractéristique de l'invention le dispositif de transfert déformable comporte au moins une paire de bras tubulaires articulés entre-eux, à savoir un bras interne connecté à la tuyauterie fixe et un bras externe qui porte à son extrémité libre un connecteur.

Selon encore une autre caractéristique de l'invention le dispositif de transfert déformable comporte au moins un flexible cryogénique qui est connecté à une extrémité à la tuyauterie de transfert fixe et dont l'autre extrémité porte un dispositif connecteur.

Selon encore une autre caractéristique de l'invention, dans sa position de stockage, le flexible cryogénique est suspendu à son extrémité qui porte le connecteur sous la bôme et s'étend en chaînette.

Selon encore une autre caractéristique de l'invention des moyens formant un bras de maintien sont associés au flexible cryogénique pour maintenir un écart prédéterminé entre le navire et la bôme lors d'un transfert de fluide et/ou un rayon de courbure prédéterminé du flexible dans les phases intermédiaires de connexion/déconnexion.

Selon encore une autre caractéristique de l'invention les moyens formant un bras de maintien sont connectés au dispositif manifold du navire lors d'un transfert de fluide.

Selon encore une autre caractéristique de l'invention le dispositif de transfert déformable comporte une pluralité de flexibles cryogéniques réunis à leurs extrémités connectées à la tuyauterie fixe et dont chacun porte à son extrémité libre un connecteur.

Selon encore une autre caractéristique de l'invention les moyens de bras de maintien sont suspendus sous la bôme par organe de liaison tel qu'un câble ou une bielle de façon à former un balancier assurant le maintien d'une distance prédéterminée entre le navire et la bôme lors d'un transfert de fluide et réduisant ou annulant les efforts s'exerçant sur les connecteurs ou manifolds lors de l'établissement d'une connexion et pendant le transfert.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- la figure 1 est une vue en perspective d'un système de transfert d'un fluide selon l'invention;
- la figure 2 est une vue schématique de dessus du système selon la figure 1;
- la figure 3 A est une vue, avec arrachement, à plus grande échelle, en direction de la flèche III de la figure 2 et illustre un premier mode de réalisation d'un dispositif de transfert déformable, dans sa position de stockage sous la bôme de support;
- la figure 3 B montre montre le dipositif de transfert selon la figure 3 A dans sa position de connexion au manifold du navire;
- la figure 3 C est une vue partielle en direction de la flèche III de la figure 3 B;
- les figures 3 D à I illustrent chacune une étape essentielle du processus de connexion du dispositif de transfert selon la figure 3 A au manifold du navire.
- la figure 4 A est une vue en direction de la flèche III de la figure 2 d'un second mode de réalisation du dispositif de transfert déformable selon l'invention, dans sa position de stockage sous la bôme;
- la figure 4 B montre le dispositif de conduites de transfert selon la figure 4 A dans sa position de connexion au navire;
- la figure 4 C est une vue en direction de la flèche IV C de la figure 4 B;
- la figure 4 D est une vue en direction de la flèche IV D de la figure 4 B;
- la figure 4 E est une vue partielle en direction de la flèche IV E de la figure 4 D;
- les figures 4 F à 4 L illustrent chacune une phase du processus de connexion du dispositif de transfert selon la figure 4 A au navire;
- les figures 4 M à 4 P illustrent chacune une étape du processus de déconnexion du dispositif de transfert selon la figure 4 A du navire;
- les figures 5 A et 5 B sont des vues similaires au vues 4 B et 4 C d'une autre version de réalisation du dispositif de transfert selon la figure 4 A;
- la figure 6 A est une vue schématique d'un troisième mode de réalisation du dispositif de transfert déformable selon l'invention, dans sa position de connexion au navire;
- les figures 6 B et 6 C sont des vues en direction des flèches respectivement VI B et VI C de la figure 6 A;
- la figure 7 est une vue similaire à celle de figure 6 A d'une variante de réalisation du dispositif de conduit de transfert selon cette figure;
- la figure 8 A est une vue en direction de la flèche III A de la figure 2 d'un autre mode de réalisation du dispositif de conduit de transfert selon l'invention;
- la figure 8 B illustre le dispositif de conduit de transfert selon la figure 8 A en une position intermédiaire lors de sa connexion au navire.
- la figure 8 C montre le dispositif de conduit de transfert selon la figure 8 A dans sa position de connexion au manifold du navire;
- les figures 9 A à 9 C sont des vues schématiques pour illustrer le processus d'entraînement de la bôme par le navire.

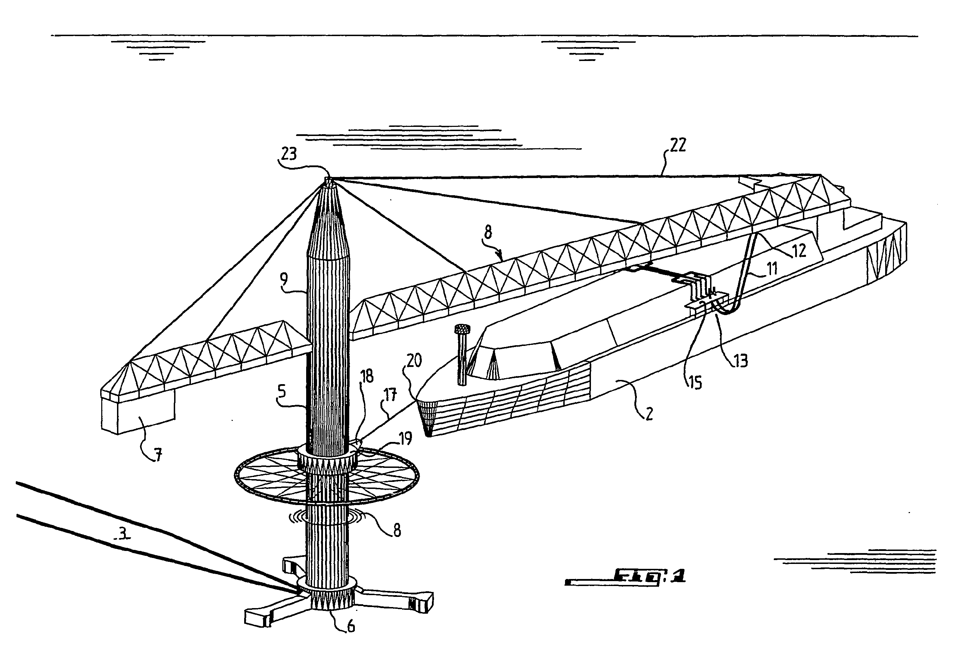

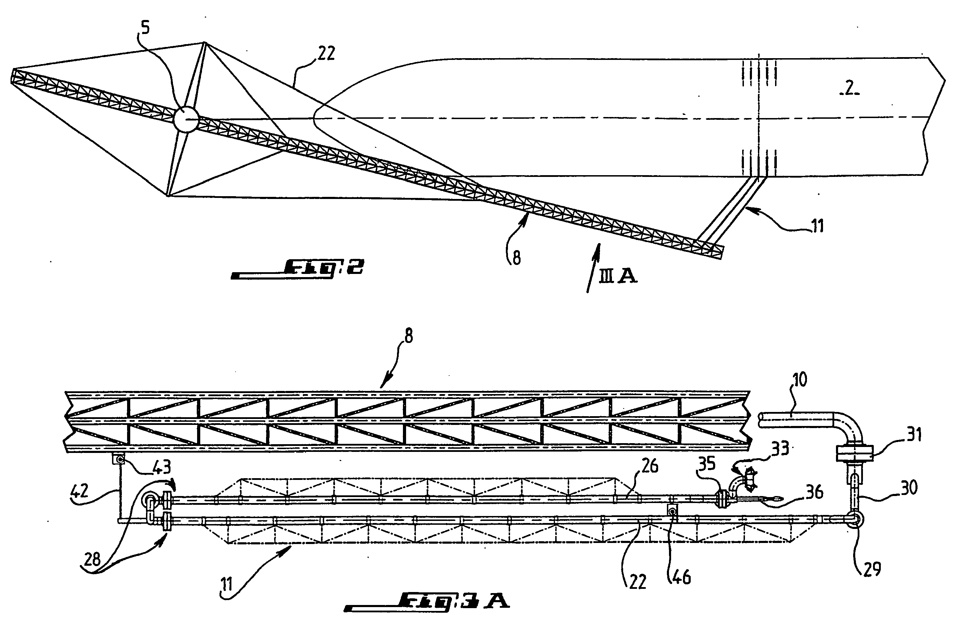

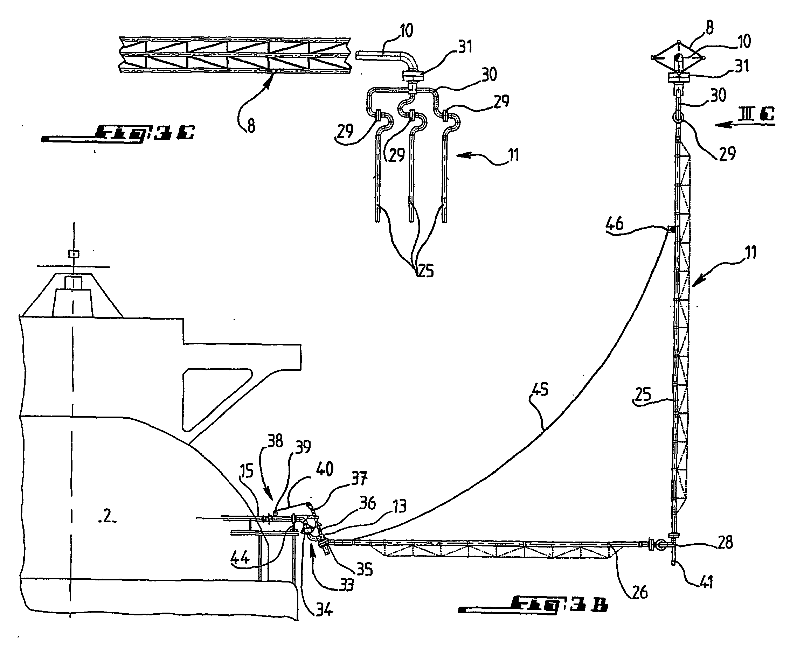

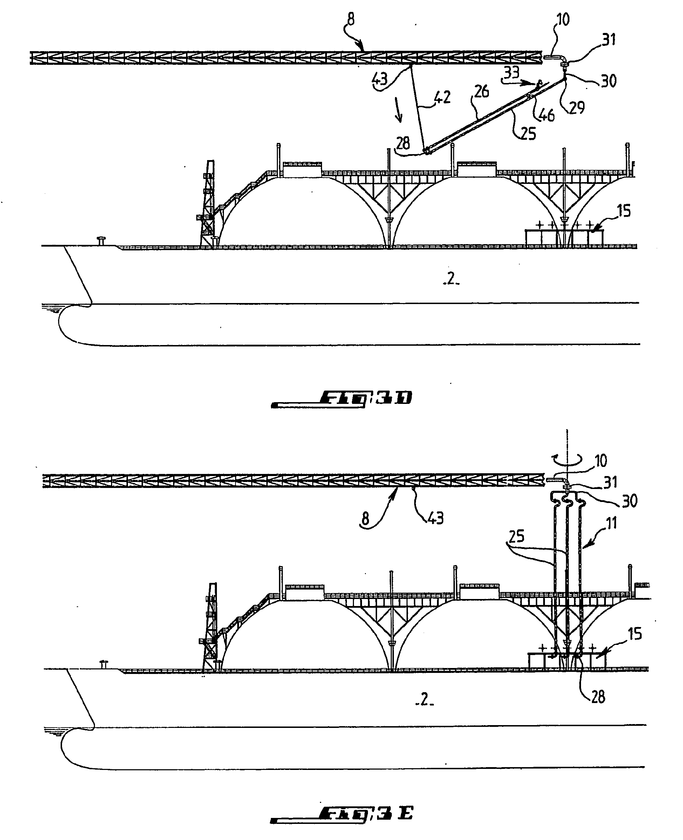

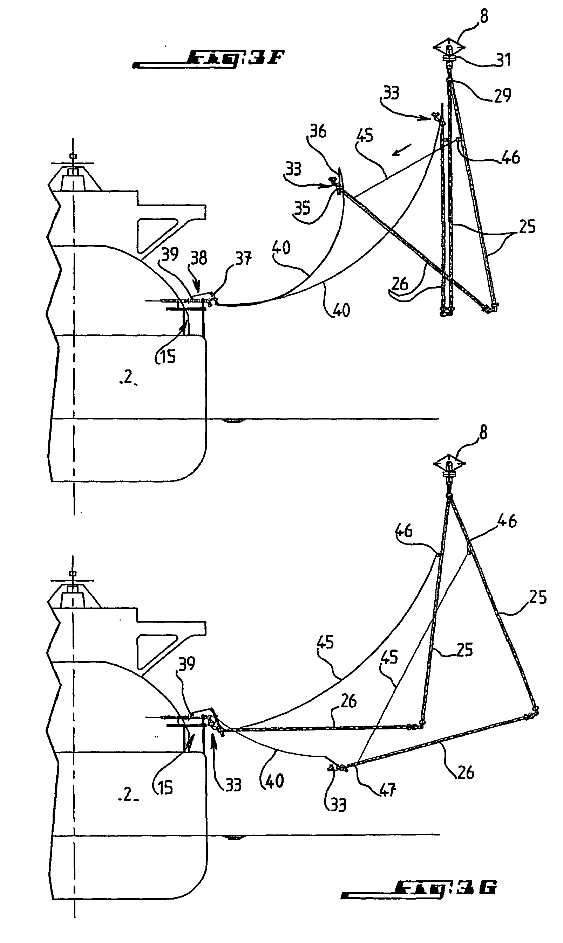

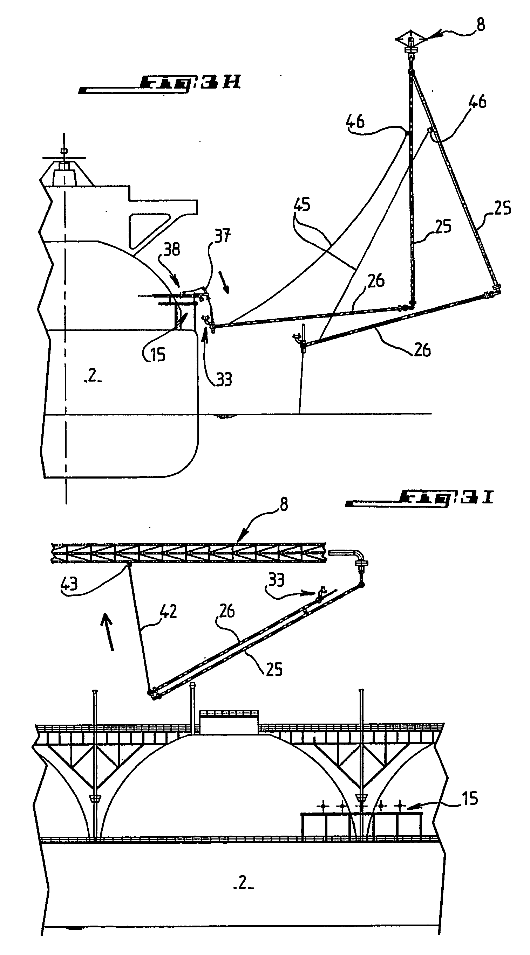

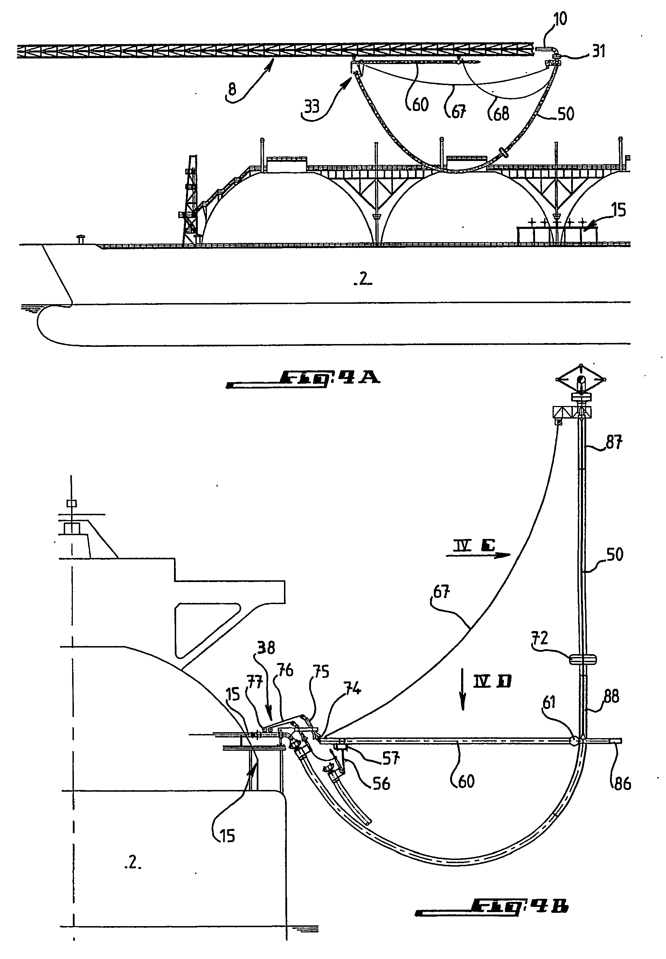

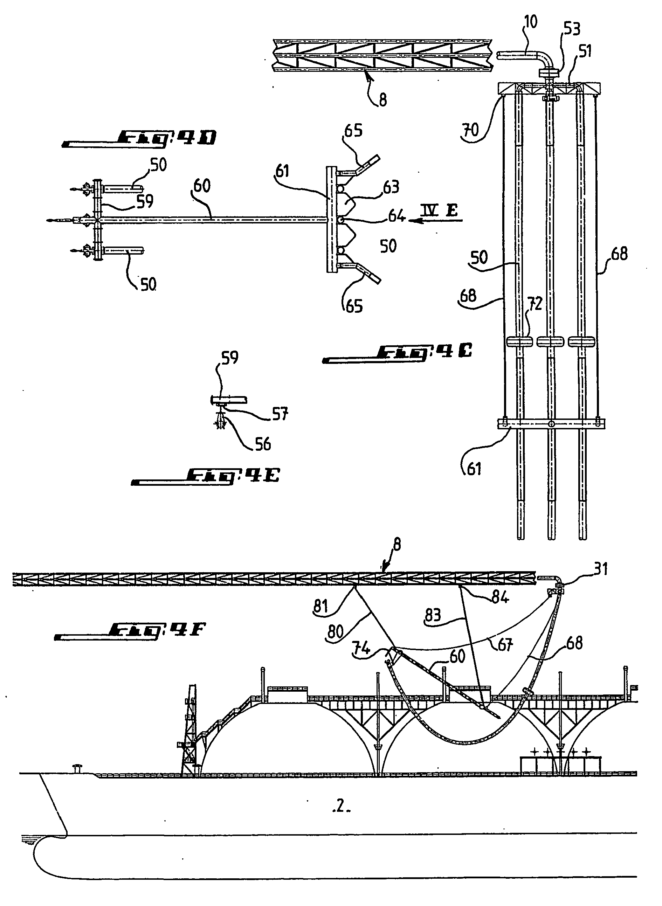

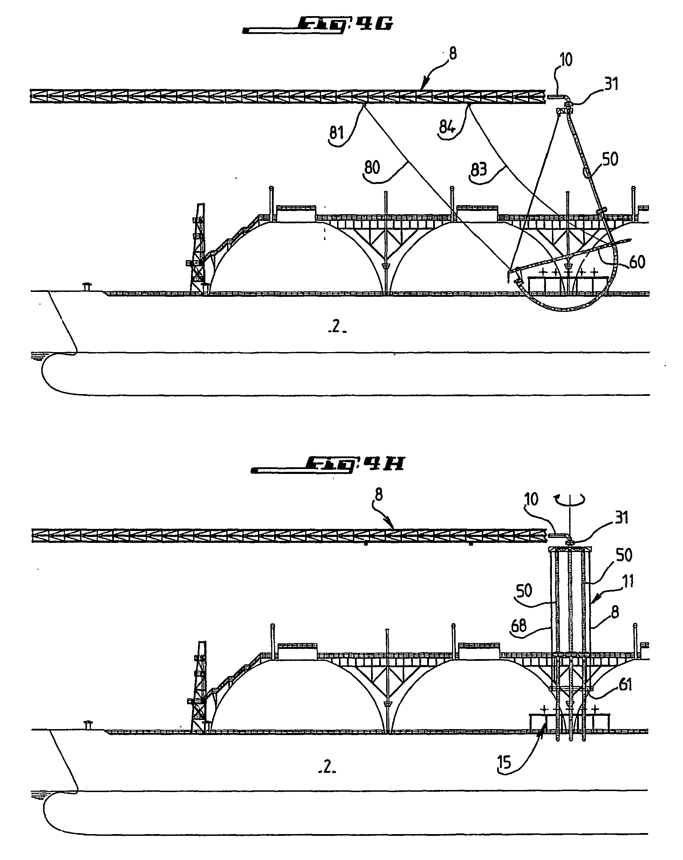

La figure 1 illustre à titre d'exemple un système de transfert 1 d'un fluide, dans le cas d'exemple d'un gaz naturel liquéfié (GNL), entre un navire de transport 2 et une installation par exemple fixe dont seulement les lignes cryogéniques de transfert immergées 3 sont représentées. Le système de transfert comporte essentiellement un poste d'amarrage 5, par exemple en site côtier ouvert sur la mer, le cas échéant off-shore, en forme d'une colonne qui repose en 6 sur le fond marin, et une bôme horizontale 8 de grande longueur montée sur la partie supérieure émergeante 9 du poste 5, de façon rotative autour de l'axe vertical de celui-ci, à une hauteur importante au-dessus du navire 2, ainsi qu'un dispositif tubulaire de transfert de fluide 11, déformable, qui est connecté à une extrémité indiquée en 12 à une tuyauterie fixe 10 qui s'étend le long de la bôme 8 et à travers le poste d'amarrage pour être connecté aux lignes immergées 3 par l'intermédiaire d'un joint tournant fluide d'axe vertical. L'autre extrémité 13 du dispositif de transfert déformable est déplaçable entre une position de stockage en 14 sous la bôme 8 et une position de connexion au dispositif manifold 15 du navire 2, localisé à proximité du centre longitudinal de celui-ci comme dans le cas des méthaniers standards.

Le navire 2 est amarré par un câble d'amarrage 17 à un point d'amarrage unique 18 d'une couronne 19 librement rotative autour de l'axe du poste d'amarrage en forme de colonne 5, l'aussière 17 étant fixée à la partie avant 20 du navire.

La figure 1 montre en outre que la bôme 8 est en plus suspendue par des câbles de support 22 à une pièce 23 au sommet de la colonne d'amarrage 9 rotative. L'équilibre statique de la bôme peut être obtenu au moyen d'un contrepoids 7 au bout de la partie "contre" bôme soutenue comme la bôme par des câbles 22 c'est-à-dire du bras de la bôme opposé à celui portant le dispositif de transfert. Tout ceci a globalement pour effet avantageux de ne pas imposer de moment d'encastrement au dispositif de guidage en rotation d'axe vertical de la bôme 8 qui autrement apparaîtrait à cause de son grand porte-à-faux.

La bôme 8 est équipée d'une motorisation pour être manoeuvrable, mais elle est susceptible d'être libre en rotation, ce qui permet à la bôme de se placer dans le lit du vent en position de stockage. En configuration de transfert elle suit le navire 2 lors de ses changements de position moyenne qui est fonction de la direction notamment du vent, du courant et des vagues. Lors d'un transfert d'un gaz naturel liquéfié entre le navire 2 et l'installation fixe, par l'intermédiaire du dispositif de transfert déformable 11, la bôme 8 est entraînée par le navire. En faisant en sorte que la résultante des efforts s'exerçant sur la bôme passe par l'axe neutre de celle-ci, la bôme est seulement sollicitée en flexion simple et non pas en torsion. Comme on le décrira ci-après, le dispositif de transfert déformable 11 est réalisé de façon à produire un filtrage des déplacements du navire. Les faibles déplacements de ce dernier autour de sa position moyenne n'engendrent pas un effort latéral suffisant pour entraîner une rotation de la bôme. Seuls les changements de position moyenne du navire entraînent une rotation. Le dispositif "absorbe" les faibles déplacements du navire. D'autre part, le dispositif est en mesure d'absorber les pics d'efforts.

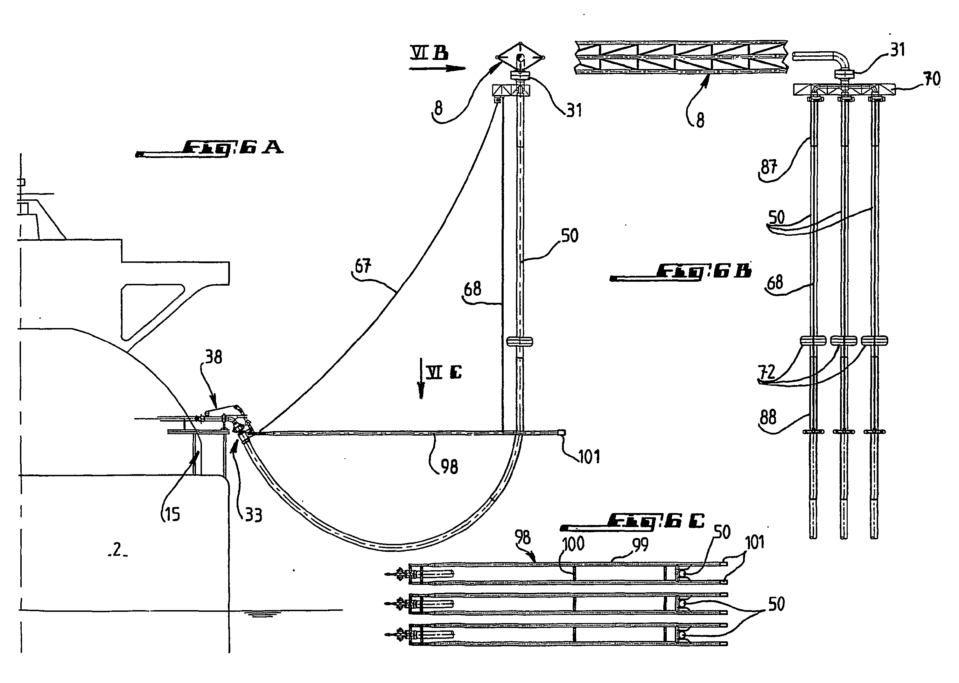

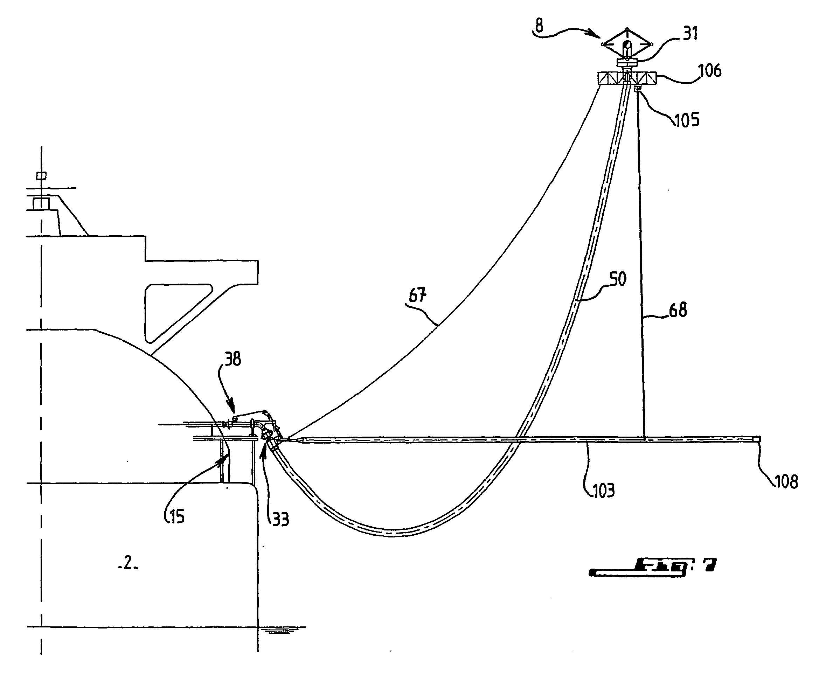

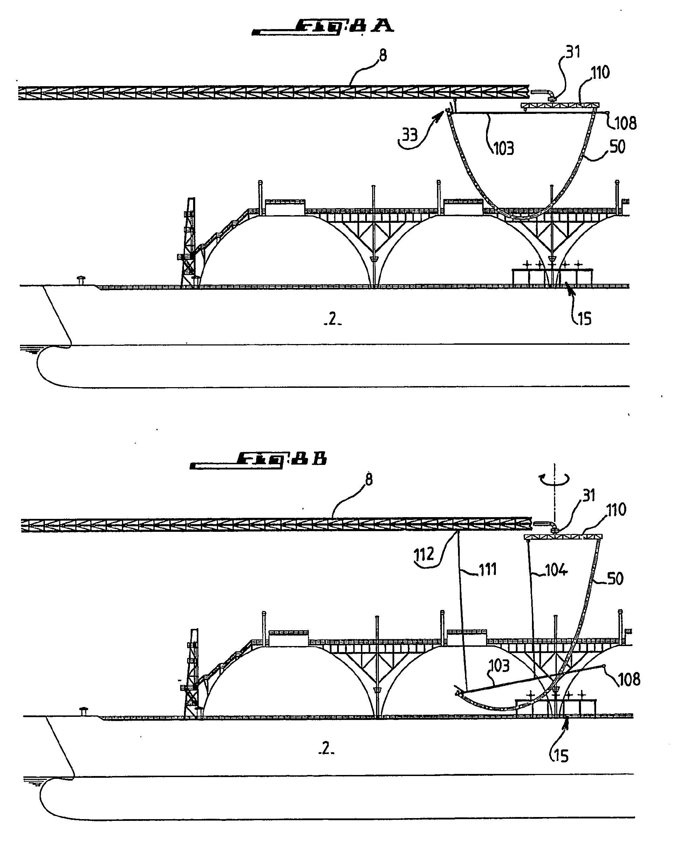

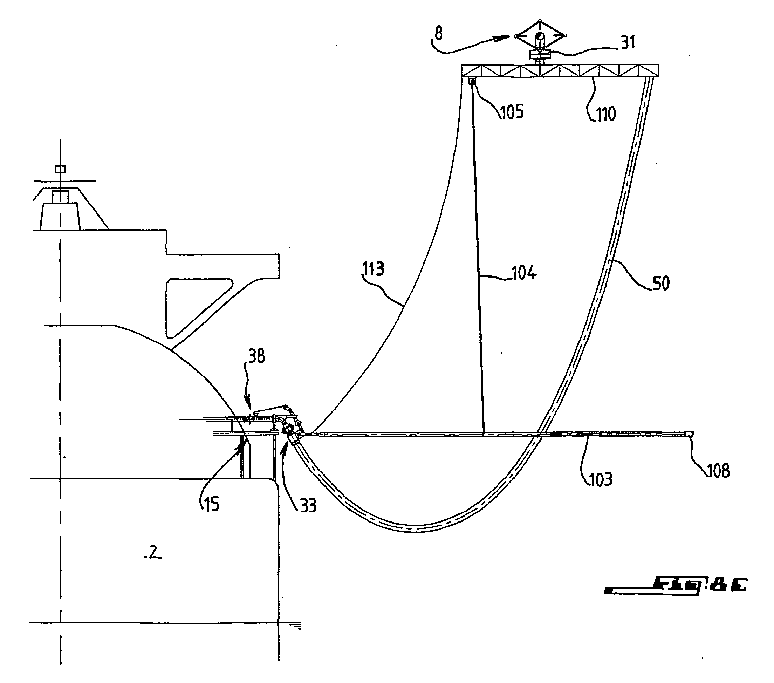

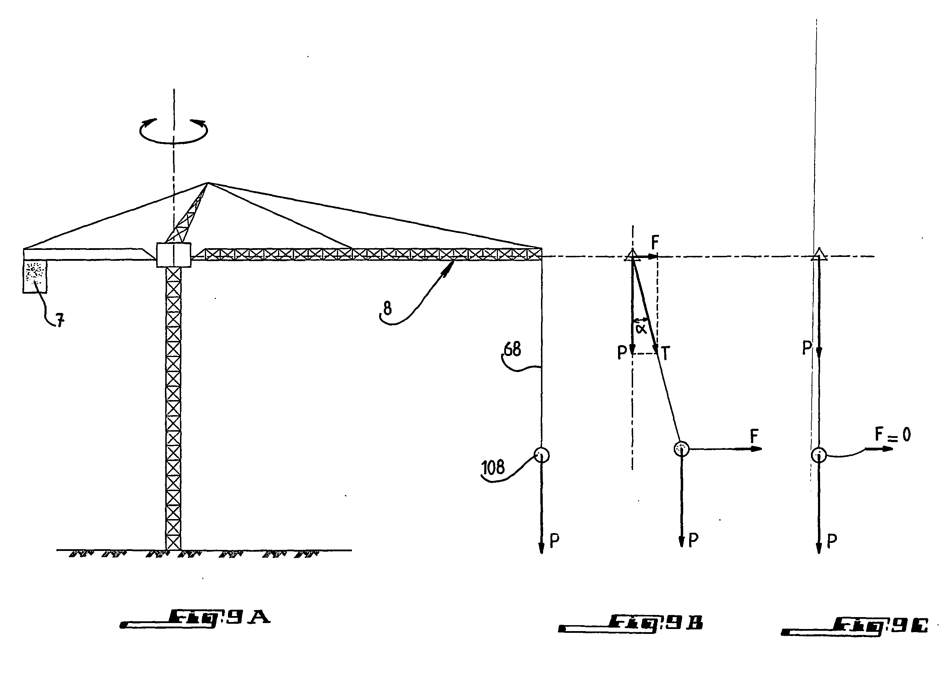

En se reportant à la figure 9 on décrira le principe d'entraînement de la bôme, qui constitue une caractéristique importante de l'invention. Cette figure montre schématiquement un contrepoids tel que par exemple le contrepoids 108 à l'extrémité du bras de maintien 103 selon la figure 7, suspendu à l'extrémité d'un câble tel que le câble 68 de cette figure, sous l'extrémité de la bôme 8. La suspension est faite au niveau de l'axe neutre. Lorsqu'il y a un mouvement relatif latéral entre le bras de maintien et ainsi le contrepoids, par rapport à la bôme, le contrepoids, en raison de son poids P, induit au niveau de la suspension à la bôme par le câble 68 une force T qui se décompose en la composante verticale P, et la composante horizontale F. Dans l'hypothèse de friction négligeable lors de la rotation de la bôme, la composante de force F va entraîner la bôme jusqu'à ce que cette composante devienne zéro, comme on le voit sur la figure 9 C.

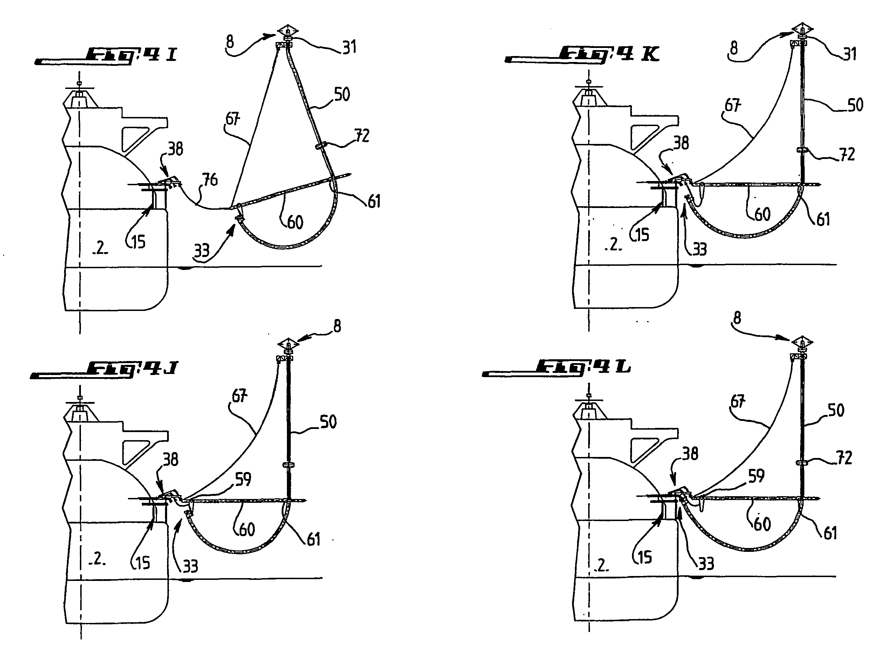

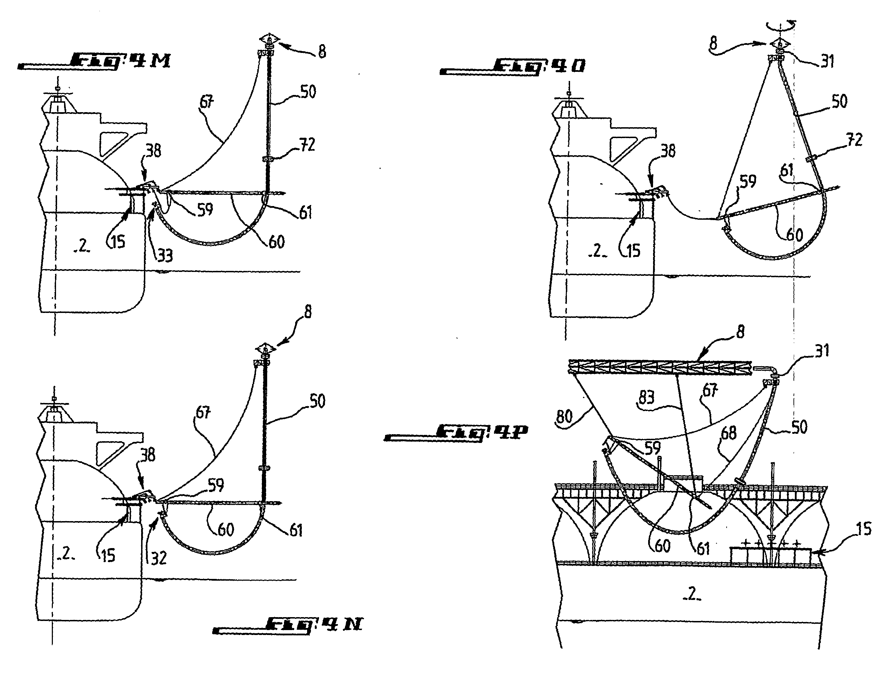

En se référant maintenant aux figures 3 A à 3 I on décrira un premier mode de réalisation du dispositif de transfert de fluide 11 selon l'invention. Selon ce mode de réalisation, le dispositif comporte trois paires de bras articulés, qui sont connectés en parallèle à la tuyauterie fixe 10 supportée par la bôme 8, chaque paire comportant un bras interne 25 et un bras externe 26. Les deux bras sont reliés l'un à l'autre par une articulation 28 du type à deux joints rotatif à axes perpendiculaires, formant ainsi un joint universel. L'extrémité supérieure de chaque bras interne 25 est reliée par un joint tournant 29 à une branche d'une pièce 30 en forme d'un E dont la base est connectée par un joint tournant 31 à la tuyauterie fixe 10. Les axes de rotation des deux joints 29 et 31 sont perpendiculaires. L'extrémité libre de chaque bras extérieur 26 porte un connecteur 33 permettant la connexion du bras au manifold 15 du navire. Le connecteur est relié au bras par l'intermédiaire de deux joints tournants 35 à axes perpendiculaires. Au connecteur est associée rigidement une tige de centrage 36, appelée pinoche, qui est configurée pour être reçue dans une trompette de centrage complémentaire 37 qui, dans le mode de réalisation représenté, fait partie d'un module de connexion 38 destiné à être interposé ou intégré au navire entre le manifold 15 du navire et le connecteur 33 du bras extérieur de transfert 26. Le module de connexion 38 porte, pour chaque bras, un treuil 39 autour duquel sera enroulé un câble 40 qui passe à travers la trompette 37 et est fixé à l'extrémité de la pinoche de centrage 36. Le module est encore pourvu d'un dispositif d'appui sur la plate-forme manifold du navire.

Le module de connexion 38 qui, comme on le voit sur les figures, constitue une rallonge des manifolds du navire, est soit stocké sur ce dernier ou sur le système de transfert. Dans le dernier cas, pour être mis en place sur les manifolds lors d'un transfert de fluide le module sera alors transporté par exemple par un véhicule de service au navire ou descendu par treuillage depuis l'extrémité de la bôme sur le navire.

Il est encore à noter que, conformément aux explications données au sujet de l'entraînement de la bôme pendant un transfert de fluide, les masses sont dans la mesure du possible ramenées en bas du bras interne. Pour trouver un optimum on pourra notamment prévoir à cet emplacement un contrepoids tel qu'indiqué en 41 sur la figure 3 B. Pour éviter d'augmenter trop le contrepoids de manière à contre-carrer les éventuels effets du vent défavorable on pourra doter la contre-bôme de volets ou panneaux orientables ou encastrables hors transfert (non représentés) destinés à équilibrer les charges dues au vent sur la bôme et la contre-bôme (système indifférent par rapport à l'axe général de rotation vertical).

Les moyens permettant de manoeuvrer le dispositif de transfert déformable 11 comportent essentiellement un câble de manoeuvre 42 susceptible d'être enroulé autour d'un treuil 43 monté sous sur la bôme 8 et dont l'extrémité libre est fixée au dispositif de transfert 11 au niveau de l'articulation 28 des deux bras. Cette commande permet d'abaisser les deux bras dans leur position repliée l'un sur l'autre. Pour le déploiement des deux bras on prévoit un autre câble de manoeuvre 45 susceptible d'être enroulé ou déroulé d'un treuil 46 monté en haut sur le bras intérieur 25 et dont l'autre extrémité est fixée en 47 au bras 26 près de l'extrémité libre de celui-ci. Les treuils peuvent être commandés, notamment à distance, de toute manière connue appropriée. La rotation du dispositif de transfert 11 formé par les trois paires de bras peut être commandée par exemple au moyen d'un vérin hydraulique ou moteur hydraulique non représenté. Cette rotation peut aussi s'effectuer par treuillage à partir d'un navire de service.

En se référant aux figures 3 D à 3 G on décrira ci-après le processus de connexion du dispositif de transfert 11 aux manifolds 15 du navire 2. A l'état de repos ou condition survie, le dispositif est stocké à l'état replié sous la bôme 8, des câbles de manoeuvre 42 et 45 étant enroulés respectivement sur leur treuil 43 et 46. Pour faire un transfert de fluide, on provoque tout d'abord l'abaissement du dispositif de transfert 11 par déroulement du câble 42 de son treuil 43. Le dispositif pivote alors autour des joints 29, conformément à la figure 3 D, jusque dans sa position sensiblement verticale. Puis on fait tourner le dispositif 11 autour du joint 31 d'un angle de 90°C dans la position représentée sur la figure 3 E, dans laquelle les axes de rotation des joints 29 s'étendent sensiblement parallèlement à l'axe du navire. En faisant dérouler le câble 45 de son treuil 46 on permet le déploiement des bras 25 et 26, comme on le voit sur la figure 3 F juqu'à la position illustrée sur la figure 3 G. Puis, après avoir, le cas échéant, préalablement monté ou intégré le module de connexion 38 sur le dispositif de manifold 15 du navire, on connecte le câble 40 fixé à l'extrémité à la pointe de la pinoche 36 au treuil 39 du module de connexion. Etant donné que le câble passe à travers la trompette 37 du module, en provoquant l'enroulement du câble sur le treuil, on amène obligatoirement même en "dynamique" le connecteur 33 dans sa position de connexion au module déterminé par la réception de la tige de centrage 36 dans la trompette 37.

Les figures 3 H et 3 I illustrent le processus de déconnexion du dispositif de transfert 11 du module de connexion 38, ce module restant sur le navire ou étant ramené de toute manière appropriée au système de transfert. En provoquant le déroulement du câble 40 du treuil 39, on permet la séparation du connecteur 33 du module jusqu'à ce que le câble 40 soit déroulé et tombe dans l'eau. Pendant cette phase de déconnexion (de survie ou d'urgence) une consigne de couple d'écartement de la bôme 8 du navire sera donnée au système de manoeuvre hydraulique de la bôme 8. Puis, en actionnant le treuil 46 on provoque le repliage du bras 26 sur le bras 25 du dispositif de transfert déformable 11, on commande la rotation de ce dernier autour de son joint 31 et la remontée du dispositif replié dans la position de stockage selon la figure 3 A par enroulement du câble 42 sur ce treuil 43.

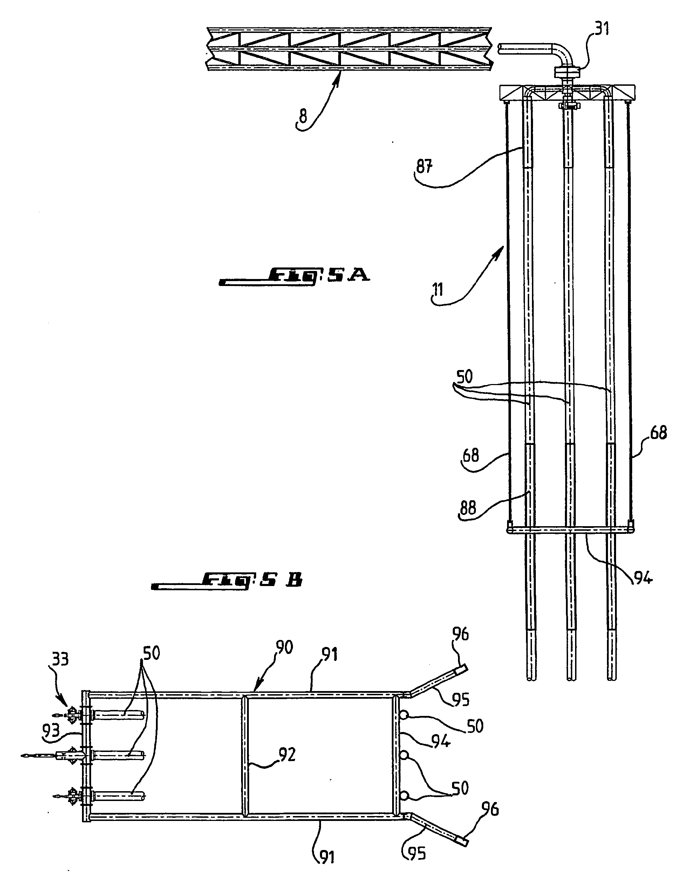

En se reportant ci-après aux figures 4 A à 4 P, on décrira un deuxième mode de réalisation du système de transfert de fluide selon l'invention. Ce mode de réalisation a pour particularité, par rapport au mode de réalisation qui vient d'être décrit, que le dispositif de transfert déformable comporte des flexibles cryogéniques portant la référence 50. Comme on le voit sur les figures 4 A à 4 E, le dispositif représenté à titre d'exemple comporte trois flexibles 50, montés en parallèle, qui sont reliés à une extrémité à une pièce en forme d'un E du type de la pièce 30 et connectée à la tuyauterie fixe 10 par l'intermédiaire de deux joints tournants à axes perpendiculaires 31. Les flexibles cryogéniques pourraient être des flexibles tels que développés, par exemple, par la société COFLEXIP STENA OFFSHORE. L'autre extrémité de chaque flexible cryogénique porte un connecteur 33, pourvu d'une tige de centrage appelée pinoche 36 et destiné à être montée sur le dispositif manifold 15 du navire, le cas échéant, par l'intermédiaire d'un module de connexion 38.

Chaque connecteur 33 est suspendu à un câble 56 susceptible d'être enroulé sur un treuil 57 qui est monté sur une traverse de support 59, elle-même fixée sur un bras en forme d'une barre 60 destinée à maintenir un écart minimum entre le navire et la bôme 8. En effet lorsque les flexibles de transfert sont disposés en chaînettes comme dans le cas présent, entre l'extrémité de la bôme 8 et les manifolds 15, les composantes horizontales des tensions tendent à ramener la bôme vers le navire. En outre la barre 60 participe à l'entraînement en rotation de la bôme 8 suivant le principe précédemment décrit. Cette barre porte à son extrémité opposée à celle portant la traverse 59 une autre traverse 61 dont la face longitudinale extérieure porte des éléments en saillie 63 délimitant entre-eux trois logements en forme de V 64 chacun destiné à la réception d'un flexible 50. A chaque extrémité, la traverse 61 comporte des cosses latérales 65 en saillie pour maintenir les flexibles près de leur logement 64. La barre de maintien 60 est suspendue à son extrémité avant par un câble 67 et à son extrémité arrière par deux câbles 68 à une poutre transversale 70 qui porte aussi la pièce en E 30 auxquels sont connectés les trois flexibles, chaque câble 68 s'étendant entre une extrémité de la poutre 70 et une extrémité de la traverse 61. Chaque flexible est en outre pourvu dans sa partie située entre la traverse 61 et la partie 70 d'écarteurs 72. On constate encore que l'extrémité avant de la barre de maintien 60 porte une pinoche 74 qui est montée pivotante sur rotule (trois rotations) et est destinée à coopérer avec une trompette complémentaire 75 montée sur le module de connexion 38, par l'intermédiaire d'un câble 76 susceptible d'être enroulé sur un treuil 77 également prévu sur le module de connexion. Celui-ci porte, bien entendu, comme dans le cas du premier mode de réalisation, des treuils d'enroulement des câbles d'engagement et de maintien des pinoches des connecteurs 33 dans leur trompette associée.

Le dispositif de transfert 11 formé par la batterie des flexibles 50 est manoeuvrable à l'aide de deux câbles de manoeuvre fixés aux extrémités avant et arrière du bras de maintien 60, à savoir un câble avant 80 susceptible d'être enroulé sur un treuil 81 monté sous la bôme 8 et deux câbles 83 susceptibles d'être enroulés sur deux treuils 84 également disposés sous la bôme, les deux treuils 81 et 84 étant écartés l'un de l'autre dans la direction longitudinale de la bôme. Il est encore important à noter que le bras 60 peut être pourvu à son extrémité arrière d'un contrepoids 86 selon le même principe que précédemment. Il est également possible de prévoir pour chaque flexible 50 des raidisseurs de courbure 87 et 88 au niveau respectivement de l'extrémité supérieure et au niveau de sa partie intermédiaire courbée 88 destinée à venir en butée contre la traverse 61 lorsque les flexibles sont connectés aux manifolds du navire, comme on le voit sur la figure 4 B. Il est à noter que suivant la nature et les caractéristiques des flexibles, ceux-ci peuvent être utilisés à la place des câbles 68 comme lien structurel entre la poutre 70 et la traverse 61, un dispositif d'accrochage de la traverse sur les flexibles étant alors prévu (non représenté).

Les figures 4 F à 4 L illustrent le processus de connexion des flexibles 50 au manifold 15 d'un navire 2. Dans leur position de repos, comme on le voit sur la figure 4 A, la barre de maintien 61 est maintenue sous la bôme 8, par les câbles 80 et 83 complètement enroulés sur leurs treuils 81 et 84. La barre s'étend parallèlement à la bôme. Les flexibles sont suspendus en chaînettes.

Pour connecter les flexibles au manifold d'un navire, on déroule les câbles de manoeuvre 80 et 83, comme on le voit sur les figures 4 F et 4 G. On constate que la courbure de la partie extérieure des flexibles est limitée du fait que les flexibles viennent buter contre la traverse 61 en s'engageant dans les logements 64 prévus à cette fin. L'engagement assure une position parfaitement déterminée des flexibles lors de la suite du processus de connexion et pendant la période de transfert et la déconnexion ultérieure. Puis on fait tourner le dispositif 11, c'est-à-dire la batterie des trois flexibles,d'un angle dé 90°C, à l'aide du joint tournant 31 ou deux joints superposés dans la position représentée sur la figure 4 H dans laquelle les flexibles s'étendent perpendiculairement à l'axe longitudinal du navire. Comme on le voit sur la figure 4 I, on tire le dispositif 11 des flexibles 50 à l'aide du câble 76 interconnecté entre la pointe de la pinoche 74 associée à la barre 60 et le treuil 77 vers le module de connexion préalablement monté sur le manifold 15 du navire. L'engagement de la pinoche 74 dans la trompette 75 assure le positionnement correct du dispositif de transfert 11. Puis on provoque le déroulement des câbles de suspension 56 des connecteurs 33 des flexibles de leurs treuils respectifs 57 et, comme décrit à l'occasion du premier mode de réalisation du dispositif de transfert, on assure la connexion entre les flexibles et les modules de connexion. On constate que la barre 61 en étant reliée à une extrémité au navire et en maintenant à son autre extrémité les flexibles assure un écart adéquat entre la bôme et le navire est parfaitement assuré.

Conformément aux figures 4 M et 4P, la déconnexion des flexibles se fait de la manière inverse du processus de connexion qui vient d'être décrit, tout d'abord en déconnectant les flexibles des modules de connexion, ensuite en enroulant les câbles de suspension 56 des connecteurs des flexibles sur leur treuil 57 (figure 4M), puis en déconnectant la barre de maintien 60, en effectuant une rotation et enfin en remontant cette barre par enroulement des câbles de manoeuvre 80 et 83 sur leurs treuils respectifs 81 et 84.

Les figures 5 A et 5 B illustrent une variante du mode de réalisation représenté sur les figures 4 A à 4 P. Cette variante concerne la réalisation du bras de maintien qui présente maintenant la forme générale d'un rectangle portant la référence générale 90, formé par deux barres longitudinales 91 interconnectées au centre et à leurs extrémités avant et arrière par des traverses respectivement 92, 93 et 94, les traverses 93 et 94 accomplissant respectivement les fonctions des traverses 59 et 61 du mode de réalisation selon les figures 4 A à 4P. Les flexibles 50 viennent maintenant directement en butée contre la traverse arrière 94 et les barres 90 et 91 se prolongent au-delà de la traverse 94 par une partie coudée vers l'extérieur 95 qui peut être pourvue à son extrémité libre d'un contrepoids 96.

Les figures 6 A à 6 C illustrent une autre variante de l'arrangement de support et de maintien des flexibles qui a pour particularité qu'un bras de maintien 98 est associé à chaque flexible 50, chaque bras étant formé essentiellement par deux barres longitudinales relativement rapprochées 99 et interconnectées aux extrémités et au milieu par des traverses 100. Chaque flexible est engagé entre les deux barres 99 de son bras 98. Le bras 98 est connecté à l'extrémité d'un flexible par une liaison rotule extrémité de flexible/bras de maintien. L'extrémité arrière de chaque barre porte un contrepoids 101. Comme on le voit sur la figure 6 B, chaque bras 99 est suspendu à la poutre transversale porteuse de la pièce en E commune auxquels les câbles sont raccordés par un câble avant 67 et un câble arrière 68 s'étendant à l'état de connexion des flexibles au navire devant les flexibles.

La figure 7 illustre une autre variante de réalisation du dispositif des flexibles de transfert selon lequel l'écart entre le navire 2 et la bôme 8 est maintenu par une barre 103 sans appui intermédiaire pour les flexibles 50 et qui est suspendue sous la bôme comme auparavant par des câbles 67 et 68. L'extrémité arrière du bras 103 porte un contrepoids 108. Dans cette version de réalisation, les flexibles 50 s'étendent librement en chaînette entre la poutre rotative 106 et l'extrémité avant du bras de maintien 103

Les figures 8 A à 8 C illustrent une version de réalisation du dispositif de transfert 11, qui se distingue du dispositif selon la figure 7 essentiellement par le fait que les points de connexion des flexibles 50 et des câbles de support 68 du bras de maintien sont situés aux deux extrémités d'un bras 110 qui est monté rotatif sous la bôme 8, par l'intermédiaire du joint tournant 31 ou deux joints tournants superposés. Comme le montre la figure 8 A, ce bras 110 est orienté parallèlement à l'axe de la bôme quand le dispositif de transfert occupe sa position de repos sous la bôme, le bras 103 s'étendant alors aussi parallèlement à celle-ci.

On constate que la suspension des bras 103 par le câble 68, près de sa zone médiane et le contrepoids aux extrémités assurent un état d'équilibre stable et permet en outre une réduction des efforts de manoeuvre lors de la connexion aux manifolds du navire et des efforts sur ceux-ci ou les rallonges de manifold. Bien entendu cet effet se produit également plus ou moins accentué dans les autres modes de réalisation.

Il ressort de la description de l'invention, que celle-ci propose un système de transfert qui est parfaitement adapté pour fonctionner dans des conditions d'environnement sévères, tout en présentant une structure simple. Grâce à l'utilisation d'une bôme, il peut être du type à point d'amarrage unique tout en étant applicable à des navires dont les manifolds s'étendent perpendiculairement à l'axe longitudinal du navire et en son milieu (méthaniers standards). Bien entendu ces manifolds n'ont pas besoin d'être disposés dans la partie centrale du navire, comme dans le cas représenté. Il est à noter que le système de transfert selon l'invention peut être réalisé sous forme d'une station off-shore.

Bien entendu de nombreuses modifications peuvent être apportées aux modes de réalisation décrits et représentés, sans sortir du cadre de l'invention. Ainsi, le support de la bôme pourraît être implanté sur un support flottant, tel qu'une unité flottante de stockage ou de production de gaz naturel liquéfié. Dans la description qui précède on a décrit uniquement les voies de transfert du GNL seul. Bien entendu on peut également prévoir un circuit de retour de gaz sous forme de vapeur. Dans ce cas, on utilisera avantageusement des joints tournants fluides multipassages du type coaxial dans l'axe de rotation de la bôme dans la colonne d'amarrage. Il est de même pour le joint 31 de connexion du dispositif de transfert déformable à la tuyauterie rigide. Concernant le joint 31, la rotation à 360°C n'étant pas nécessaire, on pourrait utiliser avantageusement soit des joints tournants à simple passage sur un même axe, soit des flexibles. De tels joints sont connus en soi et n'ont pas besoin d'être décrits ici.

Dans les modes de réalisation qui sont décrits et représentés, les dispositifs de transfert déformables se connectent au dispositif manifold par en-dessous. Bien entendu on pourrait prévoir des dispositifs de transfert qui se connectent au manifold d'en haut, c'est-à-dire par abaissement. Dans ce cas il suffit de faire en sorte que les connecteurs du dispositif de transfert s'ouvrent, le cas échéant, vers le bas et les connecteurs du dispositif manifold vers le haut, le cas échéant, verticalement, la pinoche et la trompette s'étendant de façon correspondante, parallèlement aux axes des connecteurs.

Pour donner quelques indications concernant les dimensions du système selon l'invention, uniquement à titre d'exemple, la bôme pourrait avoir une longueur comprise avantageusement entre 200 et 220 mètres et sa hauteur au-dessus du niveau de l'eau pourrait être de l'ordre de 50 mètres.

Il est à noter qu'une caractéristique essentielle de l'invention réside dans le fait que pendant les phases sensibles de connexion/déconnexion du dispositif de transfert déformable un câble unique exécute les fonctions de supportage/hissage de l'extrémité mobile de ce système déformable et de guidage, notamment latéralement. Ce câble unique est arrangé selon l'axe des mouvements principaux du navire (pilonnement).

## Revendications

1. Système de transfert d'un produit fluide, notamment d'un gaz naturel liquéfié, comprenant un navire de transport de grande longueur de ce produit et une installation de réception ou de fourniture de ce produit, du type comprenant un poste d'amarrage (5) du navire, qui comporte une structure reposant sur le fond marin et comprenant une partie supérieure émergeant de l'eau, telle qu'une structure off-shore notamment en forme d'une colonne, une bôme (8) porteuse d'une tuyauterie de transfert (10) montée sur la partie émergeante de la structure (5), rotative autour d'un axe vertical, un dispositif de transfert déformable (11) suspendu par une extrémité a une extrémité de la bôme en étant relié à la tuyauterie (10) de celle-ci tandis que l'autre extrémité comporte des moyens de connexion au dispositif manifold (15) du navire, et des moyens d'amarrage du navire à la structure émergente, le dispositif de transfert déformable (10) entre un état de stockage et un état déployé étant déplaçable entre une position de stockage et une position de connexion au manifold du navire dans lequel il est déployé, l'extrémité de la bôme étant située à proximité du manifold dans sa position de transfert, **caractérisé en ce qu'**il comprend un dispositif d'amarrage du navire, qui s'étend entre une extrémité de celui-ci et un point d'amarrage associé à la structure émergeante (5) et qui est librement rotatif autour de l'axe de cette structure de façon que le navire puisse s'orienter en fonction du vent, du courant et des vagues, avec son extrémité maintenue proche du point d'amarrage, **en ce que**, pour permettre un transfert du produit fluide entre le navire de grande longueur, tel qu'un méthanier, dont le manifold est disposé au centre du navire, la bôme (8) est une bôme de grande longueur telle que son extrémité puisse se trouver au niveau du manifold d'un tel navire lorsque celui-ci est amarré à la structure émergeante, et **en ce que** le dispositif de transfert déformable (11) est déplaçable entre la position de stockage et sa position de connexion au manifold du navire, par pivotement autour d'un axe vertical prévu au niveau de sa suspension à la bôme, et **en ce que**, dans sa position de transfert, la bôme est librement rotative autour dudit axe vertical, le pivotement du dispositif de transfert et la libre rotation de la bôme dans sa position de transfert constituant des moyens d'évitement de contraintes de torsion dans la bôme.

2. Système de transfert selon la revendication 1, **caractérisé en ce que** le dispositif de transfert déformable (11) est connecté à la tuyauterie de transfert (10) au niveau de l'extrémité libre de la bôme (8) et **en ce que** la connexion du dispositif de transfert déformable (11) à la tuyauterie de transfert fixe (10) forme les moyens par lesquels le dispositif de transfert déformable (11) est suspendu sous la bôme (8).

3. Système de transfert selon l'une des revendications 1 ou 2, **caractérisé en ce que** la bôme (8) est susceptible de tourner librement autour du poste d'amarrage pour se placer dans le lit du vent et d'être entraînée par le navire par l'intermédiaire du dispositif de transfert déformable (11) lorsque ce dispositif est connecté au dispositif manifold (15) du navire pour un transfert de fluide.

4. Système de transfert selon la revendication 3, **caractérisé en ce que** la bôme (8) et le dispositif de transfert déformable (11) sont configurés de façon que la résultante des efforts s'exerçant sur la bôme (8) passe par l'axe neutre de celle-ci de façon que la bôme de grande longueur soit seulement sollicitée en flexion simple.

5. Système de transfert selon la revendication 4, **caractérisé en ce que** le dispositif de transfert déformable (11) est réalisé de façon à produire un filtrage des déplacements du navire de façon que des faibles déplacements du navire autour de sa position moyenne n'engendrent pas un effort latéral suffisant pour entraîner la rotation de la bôme et que le dispositif soit ainsi en mesure d'absorber des mouvements haute fréquence et éviter les pics d'efforts.

6. Système de transfert selon l'une des revendications 1 à 5, **caractérisé en ce que** le dispositif de transfert déformable (11) est stocké sous la bôme (8) et est connecté à la tuyauterie fixe par dispositif à joints rotatifs (31) permettant lors de l'établissement d'une connexion au dispositif manifold (15) d'un navire (2) le pivotement précité dans une position le cas échéant sensiblement perpendiculaire à l'axe longitudinal du navire.

7. Système de transfert selon la revendication (6), **caractérisé en ce que** le dispositif de transfert déformable (11) comporte à son extrémité libre un dispositif (33) de connexion au dispositif manifold (15) du navire.

8. Système de transfert selon la revendication 7, **caractérisé en ce que** le dispositif de connexion (33) et le dispositif manifold (15) du navire comportent des moyens de centrage lors de la connexion du dispositif de transfert au dispositif manifold.

9. Système de transfert selon la revendication 8, **caractérisé en ce que** le dispositif de transfert déformable (11) comporte au moins une paire de bras tubulaires articulés entre-eux, à savoir un bras interne (25) connecté à la tuyauterie (10) et un bras externe (26) qui porte à son extrémité libre un connecteur (33).

10. Système de transfert selon la revendication 9, **caractérisé en ce que** le connecteur (33) est pourvu d'une tige de centrage (36) destinée à être reçue dans une trompette de centrage (37) associée au dispositif manifold (15) du navire, l'engagement de la tige (36) dans la trompette (37) se faisant par l'intermédiaire d'un câble interconnectant la pointe de la tige de centrage (36) et un treuil (38) pouvant faire partie du dispositif manifold et passant à travers la trompette (35).

11. Système de transfert selon l'une des revendications 9 ou 10, **caractérisé en ce que** le dispositif de transfert déformable (11) comporte une pluralité de paires de bras de transfert (25, 26), que les extrémités libres des bras internes (25) sont reliées à une pièce commune (30) connectée à la tuyauterie fixe (10) par le joint tournant précité (31) et **en ce que** chaque bras extérieur (26) porte un connecteur (33).

12. Système de transfert selon la revendication 11 à 11, **caractérisé en ce que**, à l'état stocké sous la bôme, le bras externe précité (26) est replié sur le bras interne précité (25) et **en ce que** les moyens de manoeuvre des bras comportent des moyens (42, 43) d'abaissement des bras dans leur position repliée et des moyens (45, 46) de déploiement de ces bras.

13. Système de transfert selon la revendication 11, **caractérisé en ce que** les moyens d'abaissement des bras comportent un câble (42) fixé aux bras au niveau de leur articulation mutuelle (28) et dont l'autre extrémité est susceptible d'être enroulée sur un treuil (43) monté sous la bôme (8).

14. Système de transfert selon l'une des revendications 11 ou 12, **caractérisé en ce que** les moyens de déploiement des bras articulés (25, 26) comportent un câble (45) dont une extrémité est fixée à la partie avant d'un bras externe (26), et dont l'autre extrémité est susceptible d'être enroulée sur un treuil (46) prévu sur le bras interne (25) à proximité de son extrémité libre.

15. Système de transfert selon l'une des revendications 1 à 8, **caractérisé en ce que** le dispositif de transfert déformable (11) comporte au moins un flexible cryogénique (50) qui est connecté à une extrémité à la tuyauterie de transfert fixe (10) et dont l'autre extrémité porte un dispositif connecteur (33).

16. Système de transfert selon la revendication 14, **caractérisé en ce que** dans sa position de stockage, le flexible cryogénique (50) est suspendu à son extrémité qui porte le connecteur (33) sous la bôme et s'étend en chaînette.

17. Système de transfert selon la revendication 16, **caractérisé en ce que** des moyens formant bras de maintien sont associés au flexible cryogénique (50) pour maintenir un écart prédéterminé entre le navire (2) et la bôme (8) lors d'un transfert de fluide et entraîner celle-ci en rotation.

18. Système de transfert selon la revendication 17, **caractérisé en ce que** les moyens formant bras de maintien sont connectés au dispositif manifold (15) du navire lors d'un transfert de fluide.

19. Système de transfert selon la revendication 18, **caractérisé en ce que** les moyens formant bras de maintien (60, 90, 98) portent à leurs extrémités opposées à celles susceptibles d'être connecté au dispositif manifold (15) du navire des moyens (61, 94) contre lesquels le flexible (50) prend appui lors d'un transfert de fluide.

20. Système de transfert selon l'une des revendications 16 à 19, **caractérisé en ce que** le dispositif de tranfert déformable (11) comporte une pluralité de flexibles cryogéniques (50) réunis à leurs extrémités connectées à la tuyauterie fixe (10) et dont chacun porte à son extrémité libre un connecteur (33).

21. Système de transfert selon la revendication 19, **caractérisé en ce que** les moyens de bras de maintien (60) comportent une traverse (61) à laquelle sont suspendus les connecteurs (33) des flexibles dont chacun comporte une tige de centrage destinée à coopérer avec une trompette de réception de la tige lors de l'établissement d'une connexion des flexibles sur le dispositif manifold (15) du navire (2).

22. Système de transfert selon l'une des revendications 17 à 21, **caractérisé en ce que** les moyens de bras de maintien (60, 90, 98, 103) sont suspendus sous la bôme (8) par l'intermédiaire de câble de manoeuvre (80, 83) enroulables sur des treuils (81, 84) montés sous la bôme (8).

23. Système de transfert selon l'une des revendications 17 à 22, **caractérisé en ce que** les moyens de bras de maintien (60, 90, 98, 103) comportent à leurs extrémités opposées à celles portant les flexibles un contrepoids (86, 96, 101, 108).

24. Système de transfert selon l'une des revendications 15 à 24, **caractérisé en ce que** les moyens de bras de maintien sont suspendus sous la bôme (8) par un organe de suspension (68) de façon à former un balancier assurant le maintien d'une distance adéquate entre le navire (2) et la bôme (8) lors d'un transfert de fluide et réduisant ou annulant si nécessaire les efforts s'exerçant sur les moyens connecteurs lors de l'établissement d'une connexion et pendant le transfert.

25. Système de transfert selon la revendication 24, **caractérisé en ce que** l'organe de suspension (68) est un organe séparé tel un câble ou une bielle.

26. Système de transfert selon la revendication 24, **caractérisé en ce qu'**un organe de suspension est formé par un flexible (50).

27. Système de transfert selon l'une des revendications précédentes, **caractérisé en ce que** la bôme est une bôme de grande longueur comprise avantageusement entre 200 à 220 mètres et s'étend à une hauteur le cas échéant de l'ordre de 50 mètres au-dessus du niveau de la mer.

28. Système de transfert selon l'une des revendications précédentes, **caractérisé en ce que** le dispositif de transfert déformable (11) est monté sous la bôme, pivotant autour d'un axe horizontal perpendiculaire au plan vertical passant par l'axe longitudinal de la bôme permettant le déploiement du dispositif entre sa position de stockage et sa position de connexion au manifold et l'axe vertical de pivotement permettant l'orientation du dispositif de transfert vers le manifold.

29. Système de transfert selon l'une des revendications 1 à 28, **caractérisé en ce que** le dispositif de transfert déformable (11) est articulé à la bôme (8), au niveau d'une extrémité de celle-ci.

30. Système de transfert selon l'une des revendications 1 à 29, **caractérisé en ce que** le dispositif d'amarrage comporte une aussière (17) connectée à une extrémité à une couronne (19) librement rotatif autour de l'axe de la colonne (5) et par l'autre extrémité à l'extrémité du navire.

31. Système de transfert selon l'une des revendications précédentes, **caractérisé en ce que** le dispositif de transfert déformable (11) comporte à son extrémité libre un dispositif (33) de connexion au dispositif manifold (15) de navire et **en ce que** le connecteur (33) est pourvu d'une tige de centrage (36) destinée à être reçue dans une trompette de centrage (37) associée au dispositif manifold (15) du navire, l'engagement de la tige (36) dans la trompette (37) se faisant par l'intermédiaire d'un câble interconnectant la pointe de la tige de centrage (36) et un treuil (38) pouvant faire partie du dispositif manifold et passant à travers la trompette (35).

32. Système selon la revendication 31, **caractérisé en ce que** la partie d'ouverture du dispositif manifold (15) du navire, à laquelle est connectable le connecteur du dispositif de transfert déformable (11), présente un axe qui est orienté obliquement vers le bas et la tige de centrage (36) et la trompette (37) de réception de la tige sont orientées parallèlement à cet axe d'ouverture pour permettre un rapprochement et une connexion du connecteur sur le manifold selon un mouvement ascendant en étant tiré et guidé par le câble d'interconnexion fixé à la pointe de la tige de centrage et passant à travers la trompette pour être enroulé sur le treuil (38).

## Claims

1. System for transferring a fluid product, in particular a liquefied natural gas, comprising a very long transport vessel and an installation receiving or supplying this product of the type comprising a mooring berth (5) for the vessel, which comprises a structure resting on the seabed comprising one upper part emerging from the water, such as an offshore structure, particularly in the form of a column, a boom (8) supporting transfer pipework (10) fitted on the structure's part above the surface (5), which rotates around a vertical axis, a collapsible transfer device (11) suspended by one end at one end of the boom and connected to its pipework (10), whereas the other end comprises means of connection to the vessel's manifold device (15) and means for mooring the vessel to the emergent structure, with the transfer device (10), which is collapsible between a stored state and a deployed state being movable between a storage position and a position for connection to the manifold of the vessel in which it is deployed, with the end of the boom in its transfer position being situated near the manifold, **characterised in that** it comprises a mooring device for the vessel extending between one of its ends and a mooring point linked to the emergent structure (5) and which can rotate freely around this structure's central axis in such a manner that the vessel can turn according to the wind, the current and the waves with its end being kept close to mooring point, **in that**, in order to allow a transfer of the fluid product between a very long vessel, such as a methane tanker, whose manifold is placed in the centre of the vessel, the boom (8) is a very long boom such that its end may be placed by the manifold of such a vessel when it is moored to the emergent structure, and **in that** the collapsible transfer device (11) is movable between the storage position and it position for connection to the vessel's manifold, by pivoting around a vertical axis provided level with its mounting on the boom and **in that** in its transfer position the boom can rotate freely around the aforesaid vertical axis, with the pivoting of the transfer device and the free rotation of the boom in its transfer position constituting the means for avoiding torsion strain in the boom.

2. Transfer system in accordance with Claim 1, **characterised in that** the collapsible transfer device (11) is connected to the transfer pipework (10) at the free end of the boom (8) and **in that** the connection of the collapsible transfer device (11) to the fixed transfer pipework (10) forms the means by which the collapsible transfer device (11) is suspended beneath the boom (8).

3. Transfer system in accordance with one of Claims 1 or 2, **characterised in that** the boom (8) may turn freely around the mooring berth to lie in the direction of the wind and to be carried along by the vessel through the medium of the collapsible transfer device (11) when this device is connected to the manifold device (15) of the vessel for a fluid transfer.

4. Transfer system in accordance with Claim 3, **characterised in that** the boom (8) and the collapsible transfer device (11) are configured in such a manner that the result of the stresses acting on the boom (8) passes through its neutral axis in such a manner that the very long boom is only stressed by simple flexing.

5. Transfer system in accordance with Claim 4, **characterised in that** the collapsible transfer device (11) is produced so as to bring about a filtering of the movements of the vessel so that the small movements of the vessel around its average position do not give rise to a lateral stress sufficient to involve the rotation of the boom and the device is therefore able to absorb high frequency movements and avoid peaks of stress.

6. Transfer system in accordance with one of Claims 1 to 5, **characterised in that** the collapsible transfer device (11) is stowed beneath the boom (8) and is connected to the fixed pipework by a device with rotary joints (31) allowing the above-mentioned pivoting into a position, where appropriate, roughly at right angles to the longitudinal axis of the vessel when a connection to the manifold device (15) of a vessel (2) is established.

7. Transfer system in accordance with Claim 6, **characterised in that** the collapsible transfer device (11) has at its free end a device (33) for connecting to the manifold device (15) of the vessel.

8. Transfer system in accordance with Claim 7, **characterised in that** the connection device (33) and the manifold device (15) of the vessel comprise means for centring when the transfer device is connected to the manifold device.

9. Transfer system in accordance with Claim 8, **characterised in that** the collapsible transfer device (11) comprises at least one pair of tubular articulated arms, i.e. an internal arm (25) connected to the pipework (10) and an external arm (26) which has a connector (33) at its free end.

10. Transfer system in accordance with Claim 9, **characterised in that** the connector (33) is fitted with a centring rod (36) intended to be accommodated in a centring adapter (37) linked to the vessel's manifold device (15), with the engagement of the rod (36) in the adapter (37) being effected through the medium of a cable interconnecting the tip of the centring rod (36) and a winch which may form part of the manifold device and passing through the adapter (35).

11. Transfer system in accordance with one of Claims 9 or 10, **characterised in that** the collapsible transfer device (11) comprises a multiplicity of pairs of transfer arms (25, 26), the free ends of the internal arms (25) are linked to a common part (30) connected to the fixed pipework (10) by the above-mentioned rotating joint (31) and **in that** each external arm (26) has a connector (33).

12. Transfer system in accordance with Claims 11 to 11 [sic], **characterised in that** in its stored condition beneath the boom, the above-mentioned external arm (26) is folded up on the above-mentioned internal arm (25) and **in that** the means of manoeuvring the arms comprise means (42, 43) of lowering the arms into their folded position and means (45, 46) for the deployment of these arms.

13. Transfer system in accordance with Claim 11, **characterised in that** the means for lowering the arms comprise a cable (42) fixed to the arms at their mutual articulation (28) and whose other end may be wound up on a winch (43) fitted under the boom (8).

14. Transfer system in accordance with one of Claims 11 or 12, **characterised in that** the means for deploying the articulated arms (25, 26) comprise a cable (45), of which one end is fixed to the front part of an external arm (26) and whose other end may be wound up on a winch (46) fitted on the internal arm (25) near its free end.

15. Transfer system in accordance with one of Claims 1 or 8, **characterised in that** the collapsible transfer device (11) comprises at least one cryogenic hose (50) that is connected at one end to the fixed transfer pipework (10) and whose other end has a connector device (33).

16. Transfer system in accordance with Claim 14, **characterised in that** in its stored position, the cryogenic hose (50) is suspended beneath the boom at its end which has the connector (33) and extends in a catenary arc.

17. Transfer system in accordance with Claim 16, **characterised in that** the means forming support arms are combined with the cryogenic hose (50) to maintain a predetermined distance between the vessel (2) and the boom (8) during a fluid transfer and carry this away in rotation.

18. Transfer system in accordance with Claim 17, **characterised in that** the means forming support arms are connected to the vessel's manifold device (15) during a transfer of fluid.

19. Transfer system in accordance with Claim 18, **characterised in that** the means forming support arms (60, 90, 98) have at their ends facing those likely to be connected to the vessel's manifold device (15) means (61, 94) against which the hose (50) is supported during a transfer of fluid.

20. Transfer system in accordance with one of Claims 16 to 19, **characterised in that** the collapsible transfer device (11) comprises a multiplicity of cryogenic hoses (50) brought together at their ends connected to the fixed pipework (10) and of which each has a connector (33) at its free end.

21. Transfer system in accordance with Claim 19, **characterised in that** the support arm units (60) comprise a crosspiece (61) on which are hung the connectors (33) of the hoses, each of which comprises a centring rod intended to work together with a adapter to receive the rod when a connection of the hoses is established on the manifold device (15) of the vessel (2).

22. Transfer system in accordance with one of Claims 17 to 21, **characterised in that** the support arm units (60, 90, 98, 103) are suspended beneath the boom (8) by means of the rigging cables (80, 83), which can be wound onto the winches (81, 84) fitted beneath the boom (8).

23. Transfer system in accordance with one of Claims 17 to 22, **characterised in that** the support arm units (60, 90, 98, 103) have a counterweight (86, 96, 101, 108) at their ends opposite those bearing the hoses.

24. Transfer system in accordance with one of Claims 15 to 24 [sic], **characterised in that** the support arm units are suspended beneath the boom (8) by a suspension system (68) so as to form a beam ensuring the maintenance of an adequate distance between the vessel (2) and the boom (8) during a transfer of fluid and if necessary reducing or cancelling out the stresses being exerted on the connector units when a connection is being established and during the transfer.

25. Transfer system in accordance with Claim 24, **characterised in that** the suspension system (68) is a separate system such as a cable or a tie-rod.

26. Transfer system in accordance with Claim 24, **characterised in that** a suspension system is formed by a hose (50).

27. Transfer system in accordance with one of the preceding claims, **characterised in that** the boom is a boom of great length preferably of between 200 and 220 metres and reaching a height where appropriate of the order of 50 metres above the level of the sea.

28. Transfer system in accordance with one of the preceding claims, **characterised in that** the collapsible transfer device (11) is fitted beneath the boom, pivoting around a horizontal axis at right angles to the vertical plane passing through the longitudinal axis of the boom allowing the deployment of the device between its storage position and its position for connection to the manifold and the vertical pivoting axis, allowing the orientation of the transfer device towards the manifold.

29. Transfer system in accordance with one of Claims 1 to 28, **characterised in that** the collapsible transfer device (11) is connected to the boom (8) at one end of the latter.

30. Transfer system in accordance with one of Claims 1 to 29, **characterised in that** the mooring device comprises a hawser (17) connected at one end to a crown wheel (19) that can rotate freely around the axis of the column (5) and to the end of the vessel at the other end.

31. Transfer system in accordance with one of the preceding claims, **characterised in that** the collapsible transfer device (11) comprises at its free end a device (33) for connection to the vessel's manifold device (15) and **in that** the connector (33) is fitted with a centring rod (36) intended to be accommodated in a centring adapter (37) linked to the vessel's manifold device (15), the engagement of the rod (36) in the adapter (37) being effected by a cable interconnecting the tip of the centring rod (36) and a winch (38) which may form part of the manifold device and passing through the adapter (35).

32. System in accordance with Claim 31, **characterised in that** the opening part of the manifold device (15) of the vessel, to which the connector of the collapsible transfer device (11) can be connected has an axis which is oriented obliquely downwards and the centring rod (36) and the adapter (37) to receive the rod are oriented parallel to this opening axis to allow a coming together and a connection of the connector to the manifold in an upward movement by being drawn and guided by the interconnection cable fixed to the tip of the centring rod and passing through the adapter to be coiled up on the winch (38).

## Patentansprüche

1. System zum Überführen eines flüssigen Produkts, insbesondere von flüssigem Erdgas, mit einem Schiff großer Länge zum Transportieren dieses Produkts und mit einer Anlage zum Aufnehmen bzw. Bereitstellen dieses Produkts, vom Typ mit einem Anlegeplatz (5) für das Schiff, der einen am Meeresgrund aufliegenden Aufbau und einen oberen Teil enthält, der aus dem Wasser auftaucht, wie etwa einen Offshore-Aufbau insbesondere in Form einer Säule, sowie einen Ausleger (8), der ein an dem auftauchenden Teil des Aufbaus (5) angebrachtes Überführungsleitungssystem (10) trägt und um eine senkrechte Achse drehbar ist, eine verformbare Überführungsvorrichtung (11), die mit einem Ende an das eine Ende des Auslegers gehängt und dabei mit dem Leitungssystem (10) desselben verbunden ist, während das andere Ende Mittel zum Anschluss an die Rohrverteilervorrichtung (Manifold) (15) des Schiffs enthält, und Mittel zum Vertäuen des Schiffs an den auftauchenden Aufbau, wobei die zwischen einem Verstauzustand und einem ausgefahrenen Zustand verformbare Überführungsvorrichtung (10) zwischen einer Verstaustellung und einer Anschlussstellung zum Anschließen an den Rohrverteiler des Schiffs verstellbar ist, in welcher sie ausgefahren ist, wobei das Ende des Auslegers in der Nähe des Rohrverteilers in seiner Überführungsstellung liegt, **dadurch gekennzeichnet, dass** es eine Anlegevorrichtung für das Schiff enthält, die sich zwischen einem Ende desselben und einen dem auftauchenden Aufbau (5) zugehörigen Anlegepunkt erstreckt und die um die Achse dieses Aufbaus frei drehbar ist, so dass sich das Schiff mit seinem nahe dem Anlegepunkt gehaltenen Ende je nach Wind, Strömung und Wellengang ausrichten kann, dass der Ausleger (8) - zwecks Überführung des flüssigen Produkts zwischen dem Schiff großer Länge, wie etwa einem Flüssiggastanker, dessen Rohrverteiler in der Mitte des Schiffs angeordnet ist - ein Ausleger großer Länge ist, derart, dass sein Ende in den Bereich des Rohrverteilers eines solchen Schiffes gelangen kann, wenn dieses an dem auftauchenden Aufbau angelegt ist, und dass die verformbare Überführungsvorrichtung (11) zwischen der Verstaustellung und ihrer Anschlussstellung zum Anschließen an den Rohrverteiler des Schiffs durch Verschwenken um eine senkrechte Achse verstellbar ist, die im Bereich ihrer Aufhängung am Ausleger vorgesehen ist, und dass der Ausleger in seiner Überführungsstellung um die genannte senkrechte Achse frei drehbar ist, wobei die Schwenkbewegung der Überführungsvorrichtung und die freie Drehung des Auslegers in seine Überführungsstellung Mittel zum Vermeiden von Torsionsspannungen in dem Ausleger darstellen.

2. Überführungssystem nach Anspruch 1, **dadurch gekennzeichnet, dass** die verformbare Überführungsvorrichtung (11) im Bereich des freien Endes des Auslegers (8) an das Überführungsleitungssystem (10) angeschlossen ist und dass der Anschluss der verformbaren Überführungsvorrichtung (11) an das feste Überführungsleitungssystem (10) Mittel darstellt, mit welchen die verformbare Überführungsvorrichtung (11) unter den Ausleger (8) gehängt ist.

3. Überführungssystem nach einem der Ansprüche 1 oder 2, **dadurch gekennzeichnet, dass** der Ausleger (8) um die Anlegestelle frei drehbar ist, um sich in den Wind zu stellen, und über die verformbare Überführungsvorrichtung (11) von dem Schiff mitnehmbar ist, wenn diese Vorrichtung an die Verteilervorrichtung (15) des Schiffes zwecks Mediumsüberführung angeschlossen ist.

4. Überführungssystem nach Anspruch 3, **dadurch gekennzeichnet, dass** der Ausleger (8) und die verformbare Überführungsvorrichtung (11) derart ausgelegt sind, dass die Resultierende der auf den Ausleger (8) ausgeübten Kräfte durch die neutrale Achse desselben verläuft, so dass der Ausleger großer Länge nur einer einfachen Biegebeanspruchung unterliegt.

5. Übertragungssystem nach Anspruch 4, **dadurch gekennzeichnet, dass** die verformbare Überführungsvorrichtung (11) so ausgebildet ist, dass sie eine Dämpfung für die Verlagerungen des Schiffs darstellt, so dass geringe Verlagerungen des Schiffs um seine Mittelstellung keine ausreichende Seitenkraft erzeugt, um die Drehung des Auslegers zu bewirken, und dass die Vorrichtung somit in der Lage ist, hochfrequente Bewegungen aufzunehmen und Spannungsspitzen zu vermeiden.

6. Überführungssystem nach einem der Ansprüche 1 bis 5, **dadurch gekennzeichnet, dass** die verformbare Überführungsvorrichtung (11) unter dem Ausleger (8) verstaut ist und über eine Drehgelenkvorrichtung (31) mit dem festen Leitungssystem verbunden wird, die beim Erstellen eines Anschlusses an die Verteilervorrichtung (15) eines Schiffs (2) die vorgenannte Schwenkbewegung in eine Position gegebenenfalls im wesentlichen senkrecht zur Längsachse des Schiffes ermöglicht.

7. Überführungssystem nach Anspruch 6, **dadurch gekennzeichnet, dass** die verformbare Überführungsvorrichtung (11) an ihrem freien Ende eine Vorrichtung (33) zum Anschluss an die Verteilervorrichtung (15) des Schiffes enthält.

8. Überführungssystem nach Anspruch 7, **dadurch gekennzeichnet, dass** die Anschlussvorrichtung (33) und die Verteilervorrichtung (15) des Schiffes Zentriermittel für den Anschluss der Überführungsvorrichtung an die Verteilervorrichtung enthalten.

9. Überführungssystem nach Anspruch 8, **dadurch gekennzeichnet, dass** die verformbare Überführungsvorrichtung (11) zumindest ein Paar von aneinander angelenkten rohrförmigen Armen enthält, nämlich einen inneren Arm (25), der mit dem Leitungssystem (10) verbunden ist, und einen äußeren Arm (26), welcher an seinem freien Ende ein Verbindungsstück (33) trägt.

10. Überführungssystem nach Anspruch 9, **dadurch gekennzeichnet, dass** das Verbindungsstück (33) mit einem Zentrierschaft (36) versehen ist, der dazu bestimmt ist, in einen Zentriertrompetenansatz (37) aufgenommen zu werden, welcher der Verteilervorrichtung (15) des Schiffes zugeordnet ist, wobei das Eingreifen des Schafts (36) in den Trompetenansatz (37) über ein Seil erfolgt, welches die Spitze des Zentrierschafts (36) und eine Winde (38) miteinander verbindet, die zur Verteilervorrichtung gehören kann und durch den Trompetenansatz (35) tritt.

11. Überführungssystem nach einem der Ansprüche 9 oder 10, **dadurch gekennzeichnet, dass** die verformbare Überführungsvorrichtung (11) eine Mehrzahl von Paaren von Überführungsarmen (25, 26) enthält, dass die freien Enden der inneren Arme (25) mit einem gemeinsamen Teil (30) verbunden sind, das über das vorgenannte Drehgelenk (31) an das feste Leitungssystem (10) angeschlossen ist, und dass jeder äußere Arm (26) ein Verbindungsstück (33) trägt.

12. Überführungssystem nach Anspruch 11, **dadurch gekennzeichnet, dass** im unter dem Ausleger verstauten Zustand der vorgenannte äußere Arm (26) auf den vorgenannten inneren Arm (25) umgelegt ist und dass die Mittel zum Handhaben der Arme Mittel (42, 43) zum Absenken der Arme in ihre umgelegte Stellung und Mittel (45, 46) zum Ausfahren dieser Arme enthalten.

13. Überführungssystem nach Anspruch 11, **dadurch gekennzeichnet, dass** die Mittel zum Absenken der Arme ein Seil (42) enthalten, das an den Armen im Bereich ihrer gegenseitigen Anlenkung (28) befestigt ist und das mit dem anderen Ende auf eine Winde (43) aufwickelbar ist, die unter dem Ausleger (8) gelagert ist.

14. Überführungssystem nach einem der Ansprüche 11 oder 12, **dadurch gekennzeichnet, dass** die Mittel zum Ausfahren der Gelenkarme (25, 26) ein Seil (45) enthalten, das mit einem Ende an dem vorderen Teil eines äußeren Arms (26) befestigt ist und mit dem anderen Ende auf eine Winde (46) aufwickelbar ist, die am inneren Arm (25) in der Nähe seines freien Endes vorgesehen ist.

15. Überführungssystem nach einem der Ansprüche 1 bis 8, **dadurch gekennzeichnet, dass** die verformbare Überführungsvorrichtung (11) zumindest einen kryogenen Schlauch (50) enthält, der mit einem Ende an das feste Überführungsleitungssystem (10) angeschlossen ist und mit dem anderen Ende eine Verbindungsvorrichtung (33) trägt.

16. Überführungssystem nach Anspruch 14, **dadurch gekennzeichnet, dass** der kryogene Schlauch (50) in seiner Verstaustellung mit seinem das Verbindungsstück (33) tragenden Ende unter den Ausleger gehängt ist und kettenlinienartig verläuft.

17. Überführungssystem nach Anspruch 16, **dadurch gekennzeichnet, dass** dem kryogenen Schlauch (50) Mittel nach Art eines Haltearms zugeordnet sind, um einen vorbestimmten Abstand zwischen Schiff (2) und Ausleger (8) bei einer Mediumsüberführung und beim Drehantrieb des letztgenannten einzuhalten.

18. Überführungssystem nach Anspruch 17, **dadurch gekennzeichnet, dass** die einen Haltearm bildenden Mittel bei einer Mediumsüberführung mit der Verteilervorrichtung (15) des Schiffes verbunden sind.

19. Überführungssystem nach Anspruch 18, **dadurch gekennzeichnet, dass** die Haltearmmittel (60, 90, 98) an ihren Enden, die denjenigen entgegengesetzt sind, die mit der Verteilervorrichtung (15) des Schiffes verbindbar sind, Mittel (61, 94) tragen, an die sich der Schlauch (50) bei einer Mediumsüberführung abstützt.

20. Überführungssystem nach einem der Ansprüche 16 bis 19, **dadurch gekennzeichnet, dass** die verformbare Überführungsvorrichtung (11) eine Mehrzahl von kryogenen Schläuchen (50) enthält, die an ihren mit dem festen Leitungssystem (10) verbundenen Enden zusammengeführt sind und von denen jeder ein Verbindungsstück (33) an seinem freien Ende trägt.

21. Überführungssystem nach Anspruch 19, **dadurch gekennzeichnet, dass** die Haltearmmittel (60) eine Traverse (61) enthalten, an welcher die Verbindungsstücke (33) der Schläuche eingehängt sind, von denen jeder einen Zentrierschaft enthält, der dazu bestimmt ist, mit einem Trompetenansatz zum Aufnehmen des Schafts bei der Erstellung eines Anschlusses der Schläuche an die Verteilervorrichtung (15) des Schiffes zusammenzuwirken.

22. Überführungssystem nach einem der Ansprüche 17 bis 21, **dadurch gekennzeichnet, dass** die Haltearmmittel (60, 90, 98, 103) über Handhabungsseile (80, 83) unter den Ausleger (8) gehängt sind, die auf Winden (81; 84) aufwickelbar sind, die unter dem Ausleger (8) gelagert sind.

23. Überführungssystem nach einem der Ansprüche 17 bis 22, **dadurch gekennzeichnet, dass** die Haltearmmittel (60, 90, 98, 103) an ihren Enden, die denjenigen entgegengesetzt sind, welche die Schläuche tragen, ein Gegengewicht (86, 96, 101, 108) enthalten.

24. Überführungssystem nach einem der Ansprüche 15 bis 24, **dadurch gekennzeichnet, dass** die Haltearmmittel über ein Aufhängungsorgan (68) unter den Ausleger (8) gehängt sind, so dass ein Tragbalken gebildet wird, der das Einhalten eines adäquaten Abstands zwischen Schiff (2) und Ausleger (9) bei einer Mediumsübertragung gewährleistet und der, falls erforderlich, Kräfte vermindert bzw. abbaut, die beim Erstellen eines Anschlusses und während der Überführung auf die Verbindungsmittel ausgeübt werden.

25. Überführungssystem nach Anspruch 24, **dadurch gekennzeichnet, dass** das Aufhängungsorgan (68) ein separates Organ ist, wie etwa ein Seil oder eine Stange.

26. Überführungssystem nach Anspruch 24, **dadurch gekennzeichnet, dass** ein Aufhängungsorgan aus einem Schlauch (50) gebildet ist.

27. Überführungssystem nach einem der vorangehenden Ansprüche, **dadurch gekennzeichnet, dass** der Ausleger ein Ausleger großer Länge vorteilhaft zwischen 200 und 220 Meter ist und sich in einer Höhe gegebenenfalls in der Größenordnung von 50 Metern über dem Meeresspiegel erstreckt.

28. Überführungssystem nach einem der vorangehenden Ansprüche, **dadurch gekennzeichnet, dass** die verformbare Überführungsvorrichtung (11) unter dem Ausleger gelagert und dabei um eine horizontale Achse verschwenkbar ist, die senkrecht zur vertikalen Ebene verläuft, die durch die Längsachse des Auslegers verläuft, wodurch das Ausfahren der Vorrichtung zwischen ihrer Verstaustellung und ihrer Anschlussstellung zum Anschließen an den Rohrverteiler möglich ist, wobei die vertikale Schwenkachse das Ausrichten der Überführungsvorrichtung auf den Rohrverteiler ermöglicht.

29. Überführungssystem nach einem der Ansprüche 1 bis 28, **dadurch gekennzeichnet, dass** die verformbare Überführungsvorrichtung (11) an den Ausleger (8) bei einem seiner Enden angelenkt ist.

30. Überführungssystem nach einem der Ansprüche 1 bis 29, **dadurch gekennzeichnet, dass** die Anlegevorrichtung eine Trosse (17) enthält, die mit einem Ende mit einem Kranz (19) verbunden ist, der um die Achse der Säue (5) frei drehbar ist, und mit dem anderen Ende mit dem Schiffsende verbunden ist.

31. Überführungssystem nach einem der vorangehenden Ansprüche, **dadurch gekennzeichnet, dass** die verformbare Überführungsvorrichtung (11) an ihrem freien Ende eine Vorrichtung (33) zur Verbindung mit der Verteilervorrichtung (15) des Schiffes enthält und dass das Verbindungsstück (33) mit einem Zentrierschaft (36) versehen ist, der dazu bestimmt ist, in einen Zentriertrompetenansatz (37) aufgenommen zu werden, welcher der Verteilervorrichtung (15) des Schiffes zugeordnet ist, wobei das Eingreifen des Schafts (36) in den Trompetenansatz (37) über ein Seil erfolgt, welches die Spitze des Zentrierschafts (36) und eine Winde (38) miteinander verbindet, die zur Verteilervorrichtung gehören kann, und durch den Trompetenansatz (35) tritt.

32. Überführungssystem nach Anspruch 31, **dadurch gekennzeichnet, dass** der Öffnungsteil der Verteilervorrichtung (15) des Schiffes, mit dem das Verbindungsstück der verformbaren Überführungsvorrichtung (11) verbindbar ist, eine Achse aufweist, die schräg nach unten ausgerichtet ist, wobei der Zentrierschaft (36) und der Trompetenansatz (37) zum Aufnehmen des Schafts parallel zu dieser Öffnungsachse ausgerichtet sind, um durch eine Aufwärtsbewegung eine Annährung und einen Anschluss des Verbindungsstücks an den Rohrverteiler zu gestatten, indem es über das Verbindungsseil gezogen und geführt wird, das an der Spitze des Zentrierschafts befestigt ist und durch den Trompetenansatz tritt, um auf die Winde (38) aufgewickelt zu werden.
